# FASCICULE DE BREVET EUROPEEN

(11) **EP 1 813 849 B1**
(45) Date de publication et mention de la délivrance du brevet: **23.03.2011**
(21) Numéro de dépôt: 06291428.8
(22) Date de dépôt: 11.09.2006
(51) Int. Cl.: F16L 3/10

(54) **Collier de fixation de tuyau attache rapide**
Schnellverschlussrohrschelle
Quick acting pipe support clamp

(30) Priorité: 26.01.2006 FR 0600705
(43) Date de publication de la demande: 01.08.2007
(73) Titulaire: PLOMBELEC, 45130 Meung sur Loire (FR)
(72) Inventeur: Barboux, Hervé, 45370 Dry (FR)
(74) Mandataire: Debay, Yves

(56) Documents cités:
- EP-A- 0 539 284
- EP-A1- 0 945 659
- BE-A- 486 103
- FR-A- 826 451

## Description

### DOMAINE TECHNIQUE DE L'INVENTION

La présente invention concerne un collier de fixation destiné à fixer des objets, de préférence uni-axiaux allongés quelconques, par exemple, des tuyaux, des câbles, des fils, sur un support quelconque, comme un mur, une planche, etc.

L'invention concerne plus particulièrement un collier de fixation pour tuyauterie ou analogue, allégé en poids et rapide en assemblage.

### ARRIERE-PLAN TECHNOLOGIQUE DE L'INVENTION

Les colliers de fixation sont couramment utilisés dans les installations électriques et de plomberie pour fixer sur un support, par exemple, sur un mur, des objets uni-axiaux allongés tels que, par exemple, un tuyau, un câble, un fil etc.

Dans l'état de la technique antérieure, on connaît déjà, parmi les produits et articles couramment commercialisés, un collier comprenant deux éléments distincts relativement rigides formant chacun un demi-collier dont l'un est fixe et l'autre forme une bride mobile. Ce collier habituellement métallique est réalisé le plus souvent dans un acier allié, par exemple, acier bichromaté. Les demi-colliers, fixe et mobile, présente chacun une partie (centrale) en forme d'une gouttière, par exemple, sensiblement semi-cylindrique, se prolongeant de chaque côté par une extrémité en forme de patte. Le demi-collier fixe est pourvu d'un moyen de fixation à un support fixe, par exemple, un écrou agencé dans (ou solidaire avec) la partie semi-cylindrique destinée à être vissée sur un support fixe, par exemple, sur une vis solidaire d'un mur. La forme du demi-collier fixe est généralement symétrique par rapport à l'axe de symétrie de l'écrou. Les deux parties semi-cylindriques formant un logement tubulaire, par exemple, sensiblement cylindrique, destiné à contenir une portion cylindrique d'un objet à fixer lorsque les deux éléments sont assemblés. L'assemblage se produit à l'aide de deux systèmes de fixation à vis disposés respectivement sur les pattes du demi-collier fixe et de la bride mobile assemblant deux à deux les extrémités du demi-collier fixe et de la bride mobile formant des pattes parallèles. La forme du demi-collier mobile est généralement symétrique par rapport à l'axe de symétrie de l'écrou du demi-collier fixe.

Le montage de ce collier se résume donc à une succession des opérations suivantes. D'abord, on fixe le demi-collier fixe en vissant l'écrou sur une vis solidaire du mur. Puis, on positionne un objet à fixer contre la paroi de la partie semi-cylindrique du demi-collier fixe. Ensuite, on recouvre l'objet à fixer par la partie semi-cylindrique de la bride mobile de manière à ce que l'objet à fixer soit confiné entre les deux parties semi-cylindriques respectives. Enfin, on assemble la bride mobile sur le demi-collier fixe à l'aide de deux systèmes de fixation à vis.

Malgré son apparente simplicité, le montage du collier présente plusieurs inconvénients. Le collier proprement dit (hors vis de fixation sur le support mural) est composé d'au moins quatre pièces :
- un demi-collier fixe,
- une bride mobile,
- deux vis de fixation du demi-collier mobile sur le demi-collier fixe.

Le principal inconvénient de ce type de collier de serrage est la difficulté de manipulation que peut rencontrer l'utilisateur. En effet, un tel collier impose à son utilisateur de maintenir simultanément l'objet à fixer en même temps qu'il positionne la bride mobile puis manipule chacune des vis pour fixer la bride mobile sur le demi-collier fixe.

Le brevet EP1231422A1 permet de pallier partiellement à cet inconvénient en proposant l'utilisation de vis imperdables. Ces vis sont prisonnières de la bride mobile dans laquelle elles demeurent logées et ne peuvent alors pas être égarées lors du montage. Par ailleurs, le positionnement de la bride mobile sur le demi-collier fixe facilite dans le même temps celui des vis imperdables de serrage. Néanmoins, si la solution proposée facilite la manipulation des vis, elle ne permet pas de résoudre le problème du maintien simultané de l'objet à fixer et du positionnement de la bride mobile. De plus, lorsque le collier doit être placé dans des endroits difficiles d'accès, l'introduction simultanée des deux vis dans leurs alésages taraudés respectifs se révèle compliquée, ce qui augmente la durée de fixation et de serrage du demi-collier.

Une solution connue de l'état de la technique des colliers consiste à limiter le nombre de vis en remplaçant un des deux systèmes de fixation à vis par un système de raccordement par une articulation sans vis de la bride mobile sur le demi-collier fixe correspondant. Le brevet EP0975908B1 en divulgue un exemple (colonne 4, lignes 38-43). L'invention qui est proposée par ce brevet consiste en un collier dont la bride mobile comporte à sa première extrémité une languette (« patte mâle »), en forme de T vue de dessus. Cette languette de la bride mobile saisit une découpe agencée dans une patte « femelle » correspondante du demi-collier fixe. Un raccordement par pivotement sans vis entre les deux demi-colliers est ainsi assuré par la coopération de la partie mâle avec la partie femelle respective. Le verrouillage du collier va, lui, s'opérer par serrage des autres pattes de deux demi-colliers à l'aide d'une vis de fixation traditionnelle.

Cette même approche portant sur des colliers munis, d'une part, d'un système de raccordement par articulation sans vis d'une bride mobile à un demi-collier fixe, et d'autre part, d'un système de verrouillage du collier par serrage à l'aide d'une vis de fixation traditionnelle développée dans la demande de brevet EP08977079A1 (colonne 3, lignes 16-21 ; colonne 4, lignes 7-25) et dans la demande de brevet EP0539284A1 (colonne 7, lignes 16-23, 54-58 ; colonne 8, lignes 1-50).

Cette solution basée sur une articulation sans vis permet, certes, de faire l'économie d'une vis, mais surtout de réunir la bride mobile avec le demi-collier fixe avant que l'objet à fixer ne soit positionné sur le demi-collier fixe et donc limite les manipulations complexes pour refermer serrer le collier. Pourtant, cette association de la bride mobile au demi-collier fixe peut se révéler inutile, voire même devenir un inconvénient dans certaines situations. Il peut arriver que l'orientation du collier de serrage ne permette pas à la bride mobile de rester en position ouverte lorsqu'elle s'articule avec le demi-collier fixe. Le logement pour recevoir l'objet à fixer n'est alors plus accessible et la manipulation simultanée du collier de fixation qu'il faut maintenir ouvert d'une part, et de l'objet à fixer qu'il faut positionner d'autre part, s'en trouve compliquée.

Ainsi, si les solutions apportées par les trois brevets EP097508B1, EP087079A1 et EP0539284A1 permettent l'économie d'une vis de fixation lors de la fabrication, du transport et de l'assemblage du collier, ils ne permettent pas de résoudre complètement les problèmes cités et notamment celui du positionnement facilité de l'objet à fixer dans le collier de serrage, quelle que soit son orientation.

Un collier de fixation selon le préambule de la revendication 1 est décrit dans le brevet BE 486103A.

### DESCRIPTION GENERALE DE L'INVENTION

La présente invention a pour but de pallier un ou plusieurs des inconvénients de l'art antérieur et notamment de positionner facilement l'objet à fixer dans le collier de serrage quelle que soit l'orientation du collier ou le lieu de la fixation. La présente invention a aussi pour but de conserver les avantages apportés par l'art antérieur.

Cet objectif est atteint par un collier de fixation pour tuyauterie ou analogue constitué d'au moins deux éléments distincts formant chacun un demi-collier dont l'un est fixe pourvu d'un moyen de fixation à un support fixe et l'autre forme une bride mobile, chaque élément comprenant une face extérieure opposée à une face intérieure orientée vers l'élément en vis-à-vis, et formant au moins un logement tubulaire prévu pour le passage de la tuyauterie ou analogue lorsque les deux éléments sont assemblés, chaque demi-collier se prolongeant vers l'extérieur de chaque côté par une patte, les pattes des deux demi-colliers coopérant deux à deux et formant une articulation et un système de fixation, de sorte que l'articulation des deux demi-colliers est réalisée sans vis et comporte respectivement une première patte mâle munie d'au moins une languette présentant au moins une saillie latérale et une première patte femelle munie d'au moins une découpe correspondant dans une direction à la languette et dans une autre direction de la languette augmentée des saillies latérales, de sorte que la découpe est agencée pour permettre une insertion de la languette, et que le contact de la saillie de la languette après insertion avec les bords de la découpe selon la première direction confère une mobilité angulaire relative par rotation sphérique sensiblement dans toutes les directions de la première patte mâle en liaison avec la première patte femelle, caractérisé en ce qu'au moins un des deux demi-colliers comporte au moins un bossage sur chaque côté du demi-collier le reliant avec la patte de fixation, les bossages étant disposés sur chaque partie concave cylindrique du demi-collier, et en ce qu'au moins un moyen de blocage est positionné sur la portion semi-cylindrique du demi-collier fixe à proximité de l'articulation des deux demi-colliers, de façon à ce que lorsque le collier de serrage est en position ouverte, la languette de la patte du demi-collier mobile, qui participe à l'articulation, vienne s'insérer dans le moyen de blocage.

Selon une particularité de l'invention, le collier de fixation est caractérisé en ce que chaque bossage forme un bourrelet saillant qui longe la partie cylindrique d'un demi-collier sur toute sa hauteur.

Selon une autre particularité de l'invention, le collier de fixation est caractérisé en ce qu'au moins un des moyens de blocage est formé par une découpe, dans la portion semi-cylindrique du demi-collier fixe, agencée pour former un ergot orienté vers l'articulation afin de recevoir la languette de la patte du demi-collier mobile à bloquer.

Selon une autre particularité de l'invention, le collier de fixation est caractérisé en ce que les deux premières pattes formant l'articulation comportent chacune une passerelle de renfort plate reliant le demi-collier correspondant avec un corps prolongé d'une tête plate formant une extrémité de la première patte, en ce que le corps forme le long du plan de symétrie de chaque demi-collier une pente oblique comprise entre la tête plate et la passerelle de renfort, et en ce que les pentes obliques formées par les corps de deux premières pattes sont dirigées dans le sens opposé l'une de l'autre et se croisent l'une contre l'autre une fois le collier assemblé.

Selon une autre particularité de l'invention, le collier de fixation est caractérisé en ce qu'un jonc de renfort est formé par emboutissage sur la face extérieure d'au moins un demi-collier, créant une rainure sur la face intérieure de ce demi-collier.

Selon une autre particularité de l'invention, le collier de fixation est caractérisé en ce qu'au moins un joint est agencé sur la face intérieure d'au moins un demi-collier.

Selon une autre particularité de l'invention, le collier de fixation est caractérisé en ce que le système de fixation permet un verrouillage du collier grâce à une vis imperdable logée dans un alésage situé dans une patte du demi-collier mobile de sorte que cette vis conserve sa mobilité selon son axe de rotation, et un alésage taraudé situé dans une patte du demi-collier fixe et positionné de manière à recevoir la vis lorsque le collier est verrouillé.

Un autre objectif de l'invention est de proposer une solution à la difficulté du serrage et du verrouillage du collier avec une vis lorsque ledit collier est positionné dans un espace exigu.

Cet objectif est atteint par un collier de fixation de l'invention, caractérisé en ce que le système de fixation permet un verrouillage du collier sans vis et comporte à l'extrémité opposée à l'articulation respectivement une deuxième patte mâle munie d'au moins un tenon et une deuxième patte femelle munie d'au moins une ouverture correspondante au tenon, et en ce que le tenon est susceptible d'être déformé une fois inséré dans l'ouverture.

Selon une autre particularité de l'invention, le collier de fixation est caractérisé en ce que le tenon de la deuxième patte mâle inséré dans l'ouverture de la deuxième patte femelle forme un angle obtus avec la deuxième patte femelle.

Selon une autre particularité de l'invention, le collier de fixation est caractérisé en ce que la déformation du tenon de la deuxième patte mâle inséré dans l'ouverture de la deuxième patte femelle s'opère par repliement d'un corps du tenon lors du déplacement d'un embout du tenon dans la direction de la deuxième patte femelle.

Selon une autre particularité de l'invention, le collier de fixation est caractérisé en ce que la déformation du tenon de la deuxième patte mâle inséré dans l'ouverture de la deuxième patte femelle s'opère par torsion d'un corps du tenon lorsqu'un embout du tenon est tourné sur lui-même.

Selon une autre particularité de l'invention, le collier de fixation est caractérisé en ce que l'embout du tenon présente au moins une saillie latérale ou une coupe latérale.

### DESCRIPTION DES MODES DE REALISATION PREFERES DE L'INVENTION

L'invention avec ses caractéristiques et avantages ressortira plus clairement à la lecture de la description faite en référence aux dessins annexés dans lesquels :
- la figure 1 représente une vue de côté du collier selon l'invention en position fermée selon un premier mode de réalisation utilisant un verrouillage à vis,
- la figure 2 représente schématiquement des vues de dessus respectivement du demi-collier fixe (a) et de la bride mobile (b) du collier selon un premier mode de réalisation de l'invention utilisant un verrouillage à vis,
- la figure 3 représente schématiquement des vues de coté du collier de l'invention en position fermée (a) et ouverte (b) selon le premier mode de réalisation,
- la figure 4 représente les prises de vue de côté du collier selon un second mode de réalisation de l'invention respectivement en position assemblée « ouverte non pliée » (a) et en position assemblée « fermée pliée » (b),
- la figure 5 représente le second mode de réalisation de l'invention, avec schématiquement des vues de dessus respectivement du demi-collier fixe (a) et de la bride mobile en position « ouverte non pliée » (b) du collier,
- la figure 6 représente schématiquement deux vues de dessus (a, b) de la bride mobile en position « fermée pliée » du collier selon deux variantes de réalisation selon le second mode de réalisation de l'invention,
- la figure 7 représente schématiquement quatre vues partielles de dessus (a, b, c, d) du demi-collier fixe selon quatre variantes de réalisation.

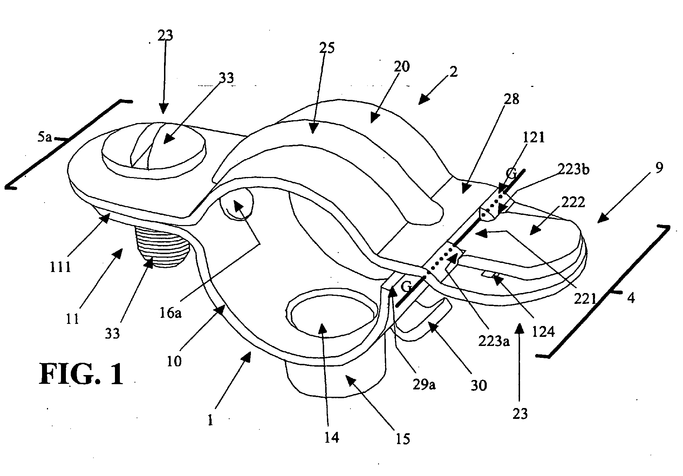

Un collier, comme celui représenté sur la figure 1, est constitué de deux demi-colliers (1, 2) complémentaires et relativement rigides. Le premier demi-collier, dit fixe (1), est destiné à être fixé sur un support sur lequel on souhaite faire passer la tuyauterie ou analogue tel qu'un mur. Le deuxième demi-collier, dit bride mobile (2), est destiné à venir serrer la tuyauterie ou analogue contre le demi-collier fixe (1). Ces deux demi-colliers (1, 2) une fois assemblés forment un logement tubulaire, par exemple, sensiblement cylindrique, destiné à contenir un objet à fixer, par exemple, une portion d'un tuyau.

Les deux demi-colliers (1, 2) sont élaborés à partir, par exemple, d'une ou de deux bandes d'alliage métallique tel que l'acier bichromaté. Cependant d'autres matériaux avec les propriétés physiques compatibles avec la nature avantageuse de l'invention, peuvent aussi être utilisés pour fabriquer le collier. Dans l'exemple illustré sur la figure 1, les deux demi-colliers (1, 2) sont réalisés à partir de la même bande et ont donc la même épaisseur (e). Dans une variante de réalisation de l'invention, chacun de ces deux éléments constituant le collier selon l'invention peut être fabriqué à partir d'un matériau qui lui est propre, par exemple, le demi-collier fixe (1) en plastique et la bride mobile (2) en aluminium ou vice versa. Ainsi, les propriétés physiques, par exemple, en termes d'élasticité, du demi-collier fixe (1) peuvent différer de celles de la bride mobile (2). Notons que le collier selon l'invention comporte au moins un segment réalisé dans un matériau dont la courbe d'allongement en fonction du taux d'étirement, autrement appelé « courbe du module de Young », présente une zone de déformation plastique.

La bande qui sert pour la fabrication des deux demi-colliers (1, 2) possède deux faces principales opposées l'une à l'autre, une face destinée à être en contact avec l'élément cylindrique à fixer de la tuyauterie ou analogue, dite face intérieure, et une deuxième face, dite face extérieure. La face intérieure est espacée de la face extérieure à une distance égale à l'épaisseur (e) de la bande métallique servant pour fabriquer les demi-colliers (1, 2).

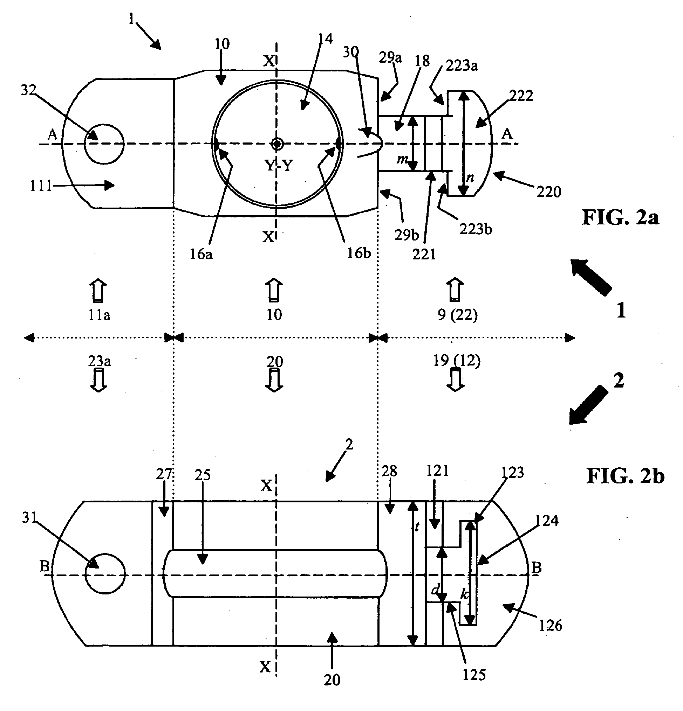

Comme le montre les figures 2, 5 et 6, le demi-collier fixe (1) et la bride mobile (2) sont symétriques par rapport à des plans de symétrie longitudinaux (A-A) et (B-B) respectivement. Ces plans de symétrie (A-A) et (B-B) sont perpendiculaires à l'axe de symétrie (X-X) du logement tubulaire, par exemple, sensiblement cylindrique, formé par le collier assemblé. Une fois le collier assemblé, les plans de symétrie longitudinaux (A-A) et (B-B) se confondent.

Le demi-collier fixe (1) est constitué d'une portion (centrale) en forme de gouttière, par exemple, semi-cylindrique (10), s'étendant symétriquement de part et d'autre de l'axe (Y-Y) vertical passant par le centre de la portion semi-cylindrique (10) dans le plan de symétrie (A-A) perpendiculairement à l'axe de symétrie (X-X) du logement sensiblement cylindrique formé par le collier simple assemblé. Le diamètre de la portion semi-cylindrique (10) est sensiblement égal au diamètre du tuyau à fixer. La distance d'entre les deux extrémités de la portion semi-cylindrique (10) a une longueur égale au diamètre du tuyau à fixer. Dans une autre variante de réalisation de l'invention, la distance d'entre les deux extrémités de la portion centrale cylindrique (10) a une longueur inférieure au diamètre du tuyau à fixer. Les extrémités de la portion semi-cylindrique (10) sont disposées dans le plan perpendiculaire au plan de symétrie (A-A) et comprenant l'axe de symétrie (X-X) du logement sensiblement cylindrique formé par le collier simple assemblé.

Dans une autre variante de réalisation de l'invention, les extrémités de la portion semi-cylindrique (10) sont disposées selon un angle allant, par exemple, de 1° à 10° par rapport au plan perpendiculaire au plan de symétrie (A-A) et comprenant l'axe (X-X) de symétrie du logement sensiblement cylindrique formé par le collier simple assemblé.

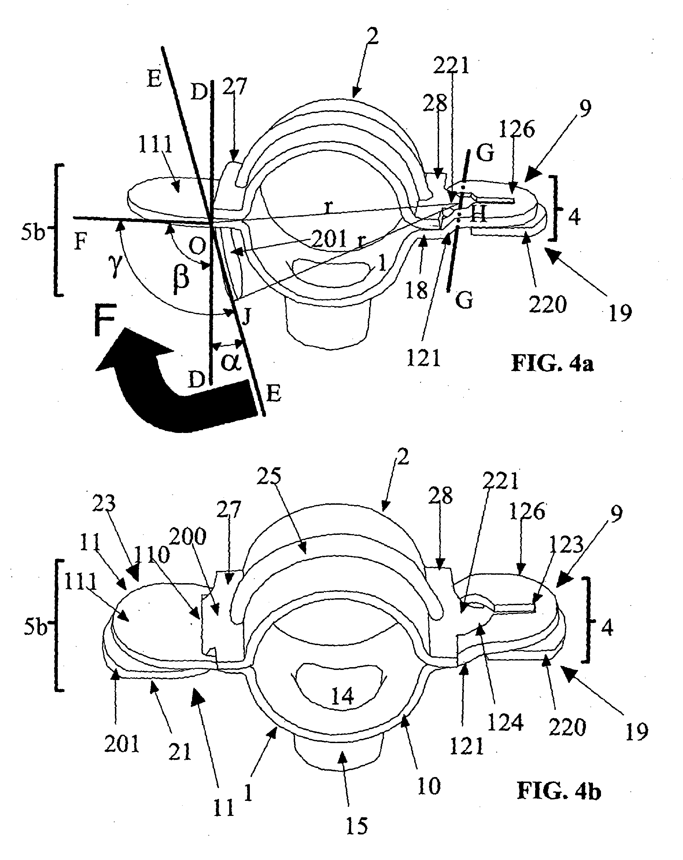

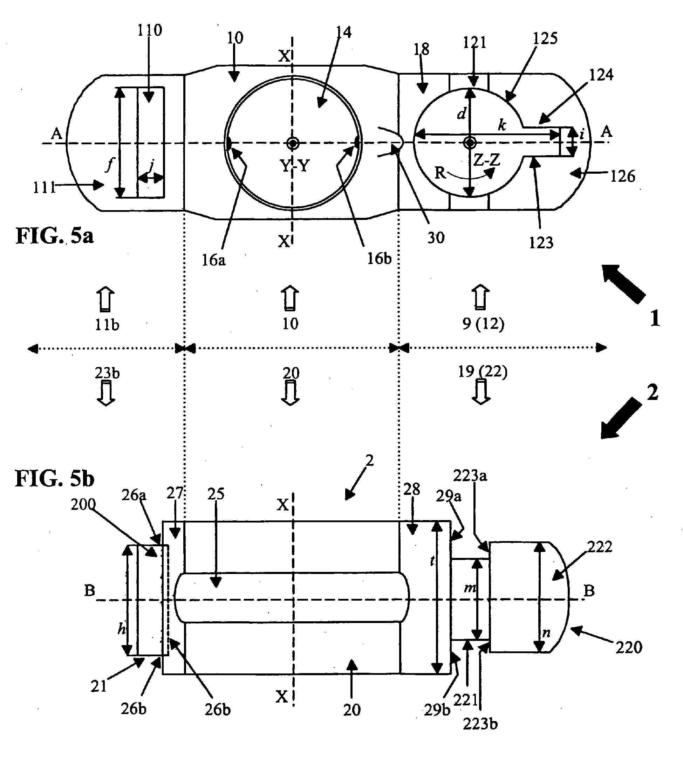

Un moyen de fixation (14, 15) du demi-collier fixe (1) sur le support fixe est formé sur la surface extérieure de celui-ci. Pour cela, un trou (14) transperçant la portion semi-cylindrique (10) est agencé, par exemple, symétriquement par rapport à l'axe (Y-Y) vertical (figure 2a et 5a) passant par le centre de la portion semi-cylindrique (10) dans le plan de symétrie (A-A) perpendiculairement à l'axe (X-X) de symétrie du logement sensiblement cylindrique formé par le collier simple assemblé. Ce trou (14) est prolongé d'une portion tubulaire coaxiale (15) (figure 1 et 4b). Cette dernière est dirigée vers l'extérieur de la portion semi-cylindrique (10) par rapport au tuyau à fixer et présente un filetage interne destiné à coopérer avec la vis de fixation, par exemple, solidaire d'un mur. L'ouverture du trou (14) forme un cône d'entrée. Ce dernier permet, par exemple, de loger la tête de la vis de fixation, celle-ci affleurant la face intérieure de la portion semi-cylindrique (10) du demi-collier fixe (1). Le corps de la vis dépasse sur l'autre extrémité de la portion tubulaire (15) dans la direction du mur pour s'y être insérée, par exemple, dans une cheville correspondante.

Dans une autre variante de réalisation de l'invention, la portion semi-cylindrique (10) n'est pas transpercée par un trou (14). Le demi-collier fixe (1) est fixé au mur par vissage de la portion tubulaire coaxiale (15) qui se visse alors sur un moyen solidaire du mur. Deux configurations sont alors possibles:
- soit la portion tubulaire coaxiale (15) est du type « femelle » disposant d'un filetage interne et le moyen solidaire du mur est du type « mâle », par exemple, une vis. Dans ce premier cas, la portion tubulaire coaxiale (15) « femelle » peut être remplacée par un écrou solidaire de la portion semi-cylindrique (10), par exemple, à l'aide d'une soudure ou par sertissage.
- soit la portion tubulaire coaxiale (15) est du type « mâle » disposant d'un filetage extérieur et le moyen solidaire du mur est du type « femelle », par exemple, un écrou, une cheville etc. Dans ce deuxième cas, la portion tubulaire coaxiale (15) « mâle » peut être remplacée par une vis solidaire de la portion semi-cylindrique (10), par exemple, à l'aide d'une soudure.

A chaque extrémité de la portion semi-cylindrique (10) du demi-collier fixe (1), vers l'extérieur du collier, s'étend, dans un plan perpendiculaire au plan de symétrie (A-A), une patte (11, 9) destinée à l'assemblage des deux demi-colliers (1, 2). Dans une autre variante de réalisation de l'invention, la patte (11, 9) destinée à l'assemblage des deux demi-colliers (1, 2) s'étend dans un plan incliné au plan de symétrie (A-A).

A proximité de chaque extrémité de la portion cylindrique (10) du demi-collier fixe (1), par exemple, sur chaque partie de la portion arrondie reliant les pattes (11, 9) à la portion semi-cylindrique (10), est formé au moins un bossage (16a, 16b). La distance séparant deux bossages (16a, 16b) disposés chacun à proximité d'une extrémité de la portion semi-cylindrique (10), par exemple, en regard deux à deux comme illustré sur la figure 2a et 5a, est inférieure au diamètre du tuyau à fixer, de manière à pouvoir maintenir le tuyau dans le demi-collier fixe (1) pendant que l'utilisateur fixe le demi-collier mobile (2) sur le demi-collier fixe (1) pour serrer le tuyau contre la face intérieure du demi-collier fixe (1). Chacun des bossages (16a, 16b) peut avoir la forme d'une bosse comme présentée sur la figure 1 ou bien être formé par un bourrelet saillant qui longe le bord de la partie cylindrique du demi-collier fixe sur toute sa hauteur.

Le demi-collier mobile, aussi appelé bride mobile (2), est constitué d'une portion (centrale) en forme d'une gouttière, par exemple, semi-cylindrique (20), complémentaire à la portion semi-cylindrique (10) du demi-collier fixe (1). La face extérieure de la portion semi-cylindrique (20) de la bride mobile (2) est surmontée longitudinalement et sensiblement au milieu d'un jonc de renfort. Ce dernier est formé, par exemple, par emboutissage. Une nervure de rigidité (25) constituant ce jonc de renfort est ainsi visible sur les figures 1 et 4. Une rainure correspondante à la nervure de rigidité (25) est créée sur la face intérieure de la portion semi-cylindrique (20) de la bride mobile (2).

Dans une autre variante de réalisation de l'invention, ce jonc de renfort est réalisé de la même manière sur la face extérieure du demi-collier fixe (1) de part et d'autre du moyen de fixation (14, 15) agencé sur la portion semi-cylindrique (10) correspondante.

La bride mobile (2) comporte aussi deux pattes (23, 19) destinées à l'assemblage des deux demi-colliers (1, 2), s'étendant vers l'extérieur de la bride mobile (2) dans le prolongement des extrémités de la portion semi-cylindrique (20) et dans un plan perpendiculaire au plan de symétrie (B-B). Dans une autre variante de réalisation de l'invention, les pattes (23, 19) destinées à l'assemblage des deux demi-colliers (1, 2) s'étendent dans un plan incliné au plan de symétrie (B-B).

La bride mobile (2) est maintenue sur le demi-collier fixe (1) (figure 1) à l'aide :
- d'un système de raccordement par articulation sans vis des deux demi-colliers formé par un premier ensemble de deux premières pattes (9, 19) coopérant l'une avec l'autre, dit articulation (4), et
- d'un système de verrouillage du collier avec vis (33), formé par un deuxième ensemble de deux deuxièmes pattes (11, 23) coopérant l'une avec l'autre au moyen d'une vis imperdable, dit système de fixation (5a).

Selon un autre mode de réalisation de l'invention, la bride mobile (2) (figure 4) est maintenue sur le demi-collier fixe (1) à l'aide:
- d'un système de raccordement par articulation sans vis des deux demi-colliers, formé par un premier ensemble de deux premières pattes (9, 19) coopérant l'une avec l'autre, dit articulation (4), et
- d'un système de verrouillage du collier sans vis par déformation d'un segment d'un demi-collier (2) formé par un deuxième ensemble de deux deuxièmes pattes (23, 11) coopérant l'une avec l'autre, dit système de fixation (5).

Pour assurer le raccordement par articulation sans vis des deux demi-colliers, l'articulation (4) comprend au moins deux premières pattes (9, 19), l'une de ces deux premières pattes (9, 19) est une patte mâle (22), l'autre est une patte femelle (12). La première patte mâle (22) comporte à son extrémité une languette (220) de largeur n, façonnée de manière à présenter au moins une saillie latérale, par exemple, en forme de T vue de dessus (épaulements (223a, 223b) opposés de tailles identiques symétriques au plan de symétrie (B-B) sur les figures 2b, 5b). La première patte femelle (12) comporte, elle, une découpe (124) correspondante (figures 2b, 5a, 7a-d) (« première patte femelle »). Cette découpe (124) est effectuée, par exemple, par poinçonnage et/ou par perçage avec ou sans fraisage.

La découpe (124), notamment sa forme et ses tailles (longueur (k), largeurs minimale (i) et maximale (d) définies telles que k>n>d sur les figures 2b et 5a), est agencée pour permettre une insertion de la languette (220), selon un plan passant par l'axe A-A puis une rotation selon l'axe Z-Z. Le croisement de la saillie (223a, 223b) de la languette (220) insérée avec les bords de la découpe (124) confère une mobilité angulaire relative par rotation sphérique sensiblement dans toutes les directions de la première patte mâle (22) en liaison avec la première patte femelle (12). L'articulation (4) rend donc possible l'articulation relative des deux premières pattes (9, 19) tout en assurant leur emboîtement l'une dans l'autre.

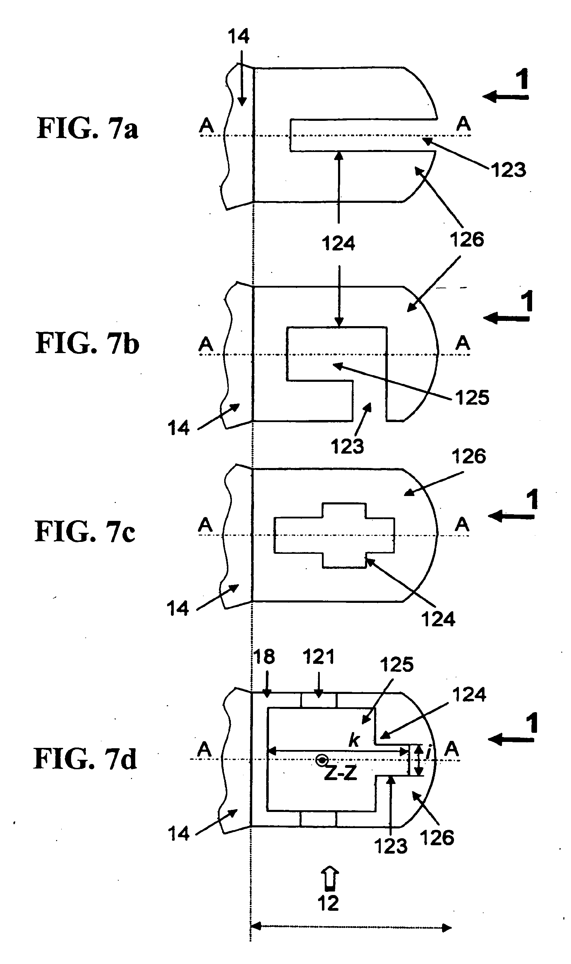

Les différentes formes de la découpe (124) vues de dessus sont représentées à titre d'illustrations non exhaustives sur les figures jointes :
- découpe (124) en forme d'une fente (123), par exemple, rectangulaire ouverte par un coté sur un orifice (125) rectangulaire, sur la figure 2b,
- découpe (124) en forme d'un orifice (125), par exemple, circulaire, muni d'une fente (123), par exemple, rectangulaire confinée, sur la figure 5a,
- découpe (124) en forme d'une fente (123), par exemple, rectangulaire ouverte sur l'extrémité longitudinale de la première patte femelle (12), sur la figure 7a,
- découpe (124) en forme d'un orifice (125), par exemple, rectangulaire, munie d'une fente (123), par exemple, rectangulaire ouverte sur la partie latérale de la première patte femelle (12), sur la figure 7b,
- découpe (124) formée par deux fentes, par exemple, rectangulaires confinées croisées de manière perpendiculaire, sur la figure 7c,
- découpe (124) en forme d'un orifice (125), par exemple, carré ou rectangulaire, muni d'une fente (123), par exemple, rectangulaire confinée, sur la figure 7d.

Pour faciliter l'insertion de la languette (220) dans la découpe (124), les parois internes de la découpe (124) peuvent être traitées, par exemple, par limage et/ou par fraisage, de manière à arrondir les angles de la découpe (124).

La première patte mâle (22) et la première patte femelle (12) peuvent être agencées sur la bride mobile (2) et le demi-collier fixe (1) respectivement, comme le montrent les exemples illustrés sur les figures 1 à 4, ou vice et versa.

La première patte mâle (22) et la première patte femelle (12) peuvent respectivement être réalisées de façon symétrique ou non par rapport aux plans de symétrie (B-B, A-A) du collier assemblé.

Dans une autre variante de réalisation de l'invention, les premières pattes (9, 19) de l'articulation (4) peuvent avoir une géométrie particulière facilitant leur raccordement par une articulation sans vis. Comme le montrent à titre d'exemple les figures 1 à 6, chaque première patte (22, 12) comporte une passerelle de renfort (28, 18) plate reliant la portion semi-cylindrique (20, 10) avec un corps (221, 121), ce dernier étant prolongé d'une tête (222, 126) plate, par exemple, arrondie, formant une extrémité de la première patte (9, 19). Le corps (221, 121) forme le long du plan de symétrie (B-B, A-A) de chaque demi-collier une pente oblique visible sur les figures 1, 3 et 4, comprise entre deux surfaces plates, à savoir, la tête (222, 126) et la passerelle de renfort (28, 18). Les pentes obliques formées par les corps (221, 121) de deux premières pattes (9, 19) sont dirigées dans le sens opposé l'une de l'autre et se croisent l'une contre l'autre de manière à assurer que les deux têtes (222, 126) soient parallèles une fois le collier assemblé (figure 1, 3a, 4a et 4b).

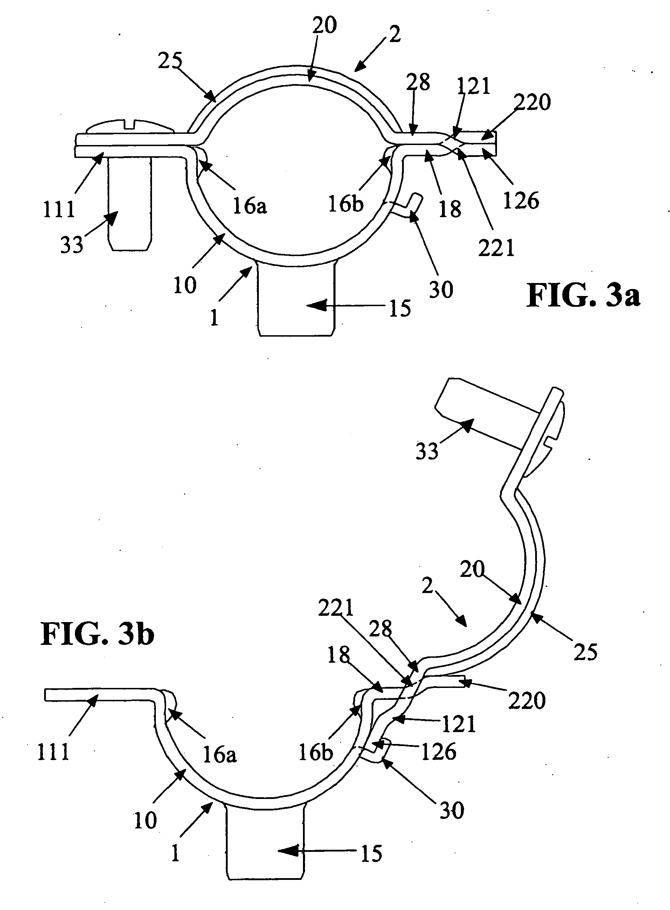

Le demi-collier fixe (1) présente sur sa portion semi-cylindrique (10), à proximité de l'articulation (4) des deux demi-colliers, un moyen de blocage (30). Ce moyen de blocage (30) est formé par un ergot orienté vers l'articulation (4) et destiné à recevoir la languette de la tête de la patte (19) de la bride mobile (2) qui participe à l'articulation sans vis (4). L'extrémité de la tête de la patte (19) vient s'insérer dans ce moyen de blocage (30) pour être pincée contre la portion semi-cylindrique (10) du demi-collier fixe (1) comme présenté sur la figure 3b. Ce moyen de blocage (30) est positionné préférentiellement de façon à avoir le même plan de symétrie longitudinal (A-A) que le demi-collier fixe (1). La réalisation du moyen de blocage peut être faite par une découpe en forme de U ou de V dans la portion semi-cylindrique (10) du demi-collier fixe (1). Cette découpe est ensuite recourbée de façon à créer un ergot fixé à la portion semi-cylindrique (10) du demi-collier fixe (1) présentant une ouverture orientée vers l'articulation (4) sans vis, et positionné pour être parallèle à la surface de la portion semi-cylindrique (10) du demi-collier fixe (1) à une distance sensiblement identique à l'épaisseur (e) de la languette de la patte (19) destinée à s'insérer dans le moyen de blocage (30).

Pour faciliter l'insertion de la languette de la tête de la patte (19) de la bride mobile (2) dans le moyen de blocage (30), les parois de la découpe peuvent être traitées par limage et/ou par fraisage, de manière à en arrondir les angles.

Selon un autre mode de réalisation, le moyen de blocage (30) est formé par un ergot, composé d'un alliage similaire à celui du collier de fixation, soudé à la portion semi-cylindrique (10) du demi-collier fixe (1) et recourbé de façon à être positionné parallèlement à la surface à laquelle il est soudé.

Pour assurer le verrouillage du collier, le système de fixation selon l'invention comprend au moins deux deuxièmes pattes (23, 11) de chacun des demi-colliers (1 et 2).

Selon un premier mode de réalisation du verrouillage (5a) du système de fixation, celui-ci comprend en plus des deux deuxièmes pattes (23a et 11 a), une vis imperdable (33). Cette vis (33) est logée dans un alésage (31) situé dans le corps de la patte (23a) de la bride mobile (2) qui participe au système de fixation (5a). La vis (33) est positionnée dans cet alésage (31) de sorte qu'elle reste prisonnière de la bride mobile (2) tout en conservant une certaine mobilité qui lui autorise une rotation selon son axe pour pouvoir être vissée. Le corps (111) de la patte (11a) du demi-collier fixe (1) possède un alésage (32) taraudé disposé en regard de l'alésage (31) lorsque les demi-colliers sont assemblés pour former le collier de fixation verrouillé. L'alésage taraudé (32) est destiné à recevoir la vis (33) avec laquelle il permet de serrer les pattes (11a, 23a) respectives des demi-colliers fixe (1) et mobile (2) l'une contre l'autre lors du verrouillage comme présenté sur la figure 3a.

Un mode de réalisation où la vis imperdable (30) est tenue prisonnière dans un alésage du demi-collier fixe (1) peut être envisagé, à la condition que cette vis (33) demeure accessible à l'utilisateur pour verrouiller le collier de fixation.

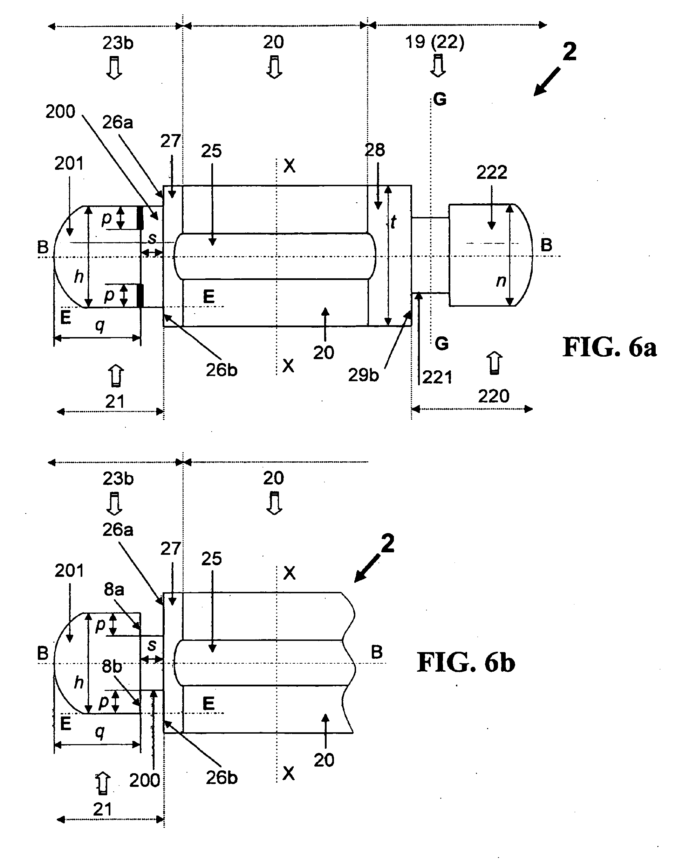

L'invention propose un second mode de réalisation du verrouillage (5b) du système de fixation. Ce verrouillage (5b) est réalisé sans vis et comprend au moins les deux deuxièmes pattes (23b, 11 b), l'une comportant à son extrémité un tenon (21) (« deuxième patte mâle »), par exemple, de forme droite, vue de dessus avec ou sans coupes (p) (figure 6a) ou en forme présentant au moins une saillie latérale, par exemple, en forme de T vue de dessus (figure 6b), l'autre comportant une ouverture (110) correspondante (« deuxième patte femelle »), par exemple, en forme rectangulaire vue de dessus (de longueur (j) et de largeur (f) sur la figure 5a). Cette ouverture (110) est effectuée, par exemple, par poinçonnage et/ou par perçage avec ou sans fraisage. Les tailles et la forme de l'ouverture (110) rendent possible l'insertion du tenon (21) et sa déformation, comme le montre à titre d'illustration la flèche (F) sur la figure 4a, assurant ainsi le verrouillage sans vis des deux deuxièmes pattes (23b, 11 b) l'une sur l'autre et, par conséquent, le verrouillage sans vis du collier dans sa totalité.

Pour faciliter l'insertion du tenon (21) dans l'ouverture (110), les parois internes de l'ouverture (110) peuvent être traitées, par exemple, par limage et/ou par fraisage, de manière à arrondir les angles de l'ouverture (110).

La deuxième patte mâle (23b) et la deuxième patte femelle (11b) peuvent être agencées sur la bride mobile (2) et le demi-collier fixe (1) respectivement, comme le montrent les exemples illustrés sur les figures 4 à 6, ou vice et versa.

La deuxième patte mâle (23b) et la deuxième patte femelle (11 b) peuvent respectivement être symétriques ou non par rapport aux plans de symétrie (B-B, A-A) du collier assemblé.

La deuxième patte mâle (23b) dispose avantageusement d'une géométrie particulière facilitant l'insertion du tenon (21) dans l'ouverture (110) de la deuxième patte femelle (11b) et sa déformation pour verrouiller le collier. Comme le montrent à titre d'exemple les figures 5b et 6a-b, la deuxième patte mâle (23b) comporte un pont (27) plat reliant la portion semi-cylindrique (20) du demi-collier correspondant avec le tenon (21) comprenant un corps (200) prolongé d'un embout (201) plat, par exemple, arrondi, formant une extrémité de la deuxième patte mâle (23b).

La longueur (s) du corps (200) du tenon (21) est sensiblement égale à l'épaisseur (e) de la bande servant pour la fabrication du collier: s ≈ e. Dans une autre variante de l'invention, cette longueur (s) du corps (200) du tenon (21) est supérieure à l'épaisseur (e) de la bande servant pour la fabrication du collier: s > e.

Pour assurer l'insertion de l'embout (201) du tenon (21) dans l'ouverture (110), le corps (200) du tenon (21) est courbé de manière à ce que l'embout (201) forme un angle (γ) obtus avec le plan constitué par la deuxième patte femelle (11 b) (figure 4a). Cet angle (γ) obtus entre l'axe (F-O) coïncidant avec la lisière de la deuxième patte femelle (11b) et l'axe (E-E) coïncidant avec la lisière de l'embout (201) du tenon (21) est constitué par un angle droit (β) et un angle aigu (α) sur la figure 4a. La courbure du corps (200) du tenon (21) est telle que l'embout (201) forme un segment d'un cylindre imaginaire dont l'axe de symétrie correspond à l'axe (G-G) sur la figure 4a traversant les corps (221, 121) des premières pattes (9, 19) au milieu de leurs pentes obliques de manière perpendiculaire au plan de symétrie (B-B, A-A) du collier assemblé. Dans l'exemple illustré sur la figure 4, l'axe (G-G) correspond à l'axe de pivot qui se forme entre la bride mobile (2) et le support fixe (1) ou, plus exactement, entre les pentes obliques respectifs des corps (221, 121) des premières pattes (9, 19) une fois que l'articulation (4) est assemblée, comme cela sera détaillé ci-dessous.

Le matériau de fabrication du collier en général et du corps (200) du tenon (21) en particulier, est tel qu'il rend possible, par exemple, un repliement du corps (200) du tenon (21) dans le sens de la flèche (F) comme illustré dans l'exemple sur la figure 4a, de manière à remettre l'embout (201) du tenon (21) parallèlement à la deuxième patte femelle (11). Une fois le corps (200) du tenon (21) replié, les axes (E-E) et (F-O) deviennent parallèles ce qui rend l'angle (γ = α + β) initialement obtus nul. Le repliement du corps (200) du tenon (21) crée une pente oblique au niveau d'intersection du corps (200) avec la lisière de l'ouverture (110) agencé dans la deuxième patte femelle (11).

L'assemblage du collier selon l'invention va maintenant être décrit se référant à l'exemple illustré sur les figures 1 à 6 en supposant que le demi-collier fixe (1) est d'ores et déjà fixé sur un mur par le biais du moyen de fixation (14, 15) coopérant avec la vis de fixation (non représentée sur les figures) et la cheville solidaire du mur comme évoqué précédemment.

Pour fixer la bride mobile (2) sur le demi-collier fixe (1) l'utilisateur doit d'abord actionner l'articulation (4).

Dans le cas d'un collier de serrage dont la patte (9) du demi-collier fixe (1) est la première patte femelle (12) et la patte (19) de la bride mobile (2) est la première patte mâle (22), comme présenté sur les figures 4 et 6, la première étape consiste donc à insérer la languette (220) de la première patte mâle (22) dans la découpe (124) de la première patte femelle (12) afin de faire coopérer la bride mobile (2) avec le demi-collier fixe (1). L'utilisateur doit alors présenter la bride mobile (2) du côté de la face intérieure de la première patte femelle (12) du demi-collier fixe (1) de manière à ce que le plan de symétrie longitudinal (B-B) de la bride mobile (2) soit perpendiculaire au plan de symétrie longitudinal (A-A) du demi-collier fixe (1). L'extrémité de la languette (220), c'est-à-dire la tête (222), est placée en face de la découpe (124) et parallèlement à la fente (123) autorisant ainsi l'insertion de la languette (220) dans la découpe (124). En effet, la largeur (n) de la tête (222) de la languette (220) est inférieure ou égale à la longueur (k) de la découpe (124) formée par la fente (123) prise ensemble avec l'orifice circulaire (125) : n ≤ k. De même, l'épaisseur (e) de la tête (222) de la languette (220) est inférieure ou égale à la largeur minimale (i) de la découpe (124) : e ≤ i. Pour finir, la languette (220) est insérée dans la découpe (124) jusqu'à la butée des épaulements (29a, 29b) de la passerelle de renfort (28) de la première patte mâle (22) contre la première patte femelle (12). En effet, la largeur (t) de la passerelle de renfort (28) est supérieure à la largeur maximale (d) de la découpe (124): t > d.

La deuxième étape consiste en l'emboîtement de la première patte mâle (22) dans la première patte femelle (12). Pour cela, la bride mobile (2) est déplacée dans le plan de symétrie (A-A) du demi-collier fixe (1) jusqu'à ce que l'axe (G-G) du corps (221) de la bride mobile (2) soit perpendiculaire à l'axe de symétrie (Z-Z) de l'orifice circulaire (125) de manière à permettre une rotation de 360° de la bride mobile (2) autour de l'axe (Z-Z) sans que la première patte mâle (en forme de T) de la bride mobile (2) ne puisse se retirer facilement de la découpe (124) de la première patte femelle (12) du demi-collier fixe (1). Les épaulements (223a, 223b) de la tête (222) de la languette (220) s'appuyant contre la face extérieure de la première patte mâle (12) dans les environs de l'orifice (125) interdisent toute possibilité pour la bride mobile (2) de se séparer du support fixe (1). En effet, la largeur (m) du corps (221) de la bride mobile (2) est inférieure ou égale à la largeur maximale (d) de la découpe (124) : m ≤ d, tandis que la largeur (n) de la tête (222) de la bride mobile (2) est supérieure à la largeur maximale (d) de la découpe (124) : n > d. Puis la bride mobile (2) est pivotée autour de l'axe (Z-Z) de manière à ce que la languette (220) de la bride mobile (2) puisse venir s'insérer dans le moyen de blocage (30) située sur la portion cylindrique (10) du demi-collier fixe (1). La bride mobile (2) peut alors être lâchée par l'utilisateur reste emboîtée au demi-collier fixe (1). L'utilisateur n'est donc plus obligé d'immobiliser sa main pour maintenir la bride mobile (2) en position ouverte avec le demi-collier fixe (1).

Dans le cas d'un collier de serrage dont la patte (9) du demi-collier fixe (1) est la première patte mâle (22) et la patte (19) de la bride mobile (2) est la première patte femelle (12), comme présenté sur les figures 1 à 3, la première étape consiste, ici aussi, à insérer la languette (220) de la première patte mâle (22) dans la découpe (124) de la première patte femelle (12) afin de faire coopérer la bride mobile (2) avec le demi-collier fixe (1). L'utilisateur doit alors présenter la bride mobile (2) du côté de la face intérieure de la première patte femelle (12) du demi-collier fixe (1), de manière à ce que le plan de symétrie longitudinal (B-B) de la bride mobile (2) soit confondu avec le plan de symétrie longitudinal (A-A) du demi-collier fixe (1). L'extrémité de la languette (220), c'est-à-dire la tête (222), est placée en face de la découpe (124) et parallèlement à la fente (123) autorisant ainsi l'insertion de la languette (220) dans la découpe (124). En effet, la largeur (n) de la tête (222) de la languette (220) est inférieure ou égale à la longueur (k) de la découpe (124) formée par la fente (123) avec l'orifice circulaire (125) : n ≤ k. De même, l'épaisseur (e) de la tête (222) de la languette (220) est inférieure ou égale à la largeur minimale (i) de la découpe (124) : e ≤ i. Pour finir, la languette (220) est insérée dans la découpe (124) jusqu'à la butée des épaulements (29a, 29b) de la partie semi-cylindrique (10) du demi-collier fixe (1) contre la première patte femelle (12). En effet, la largeur (t) de la partie semi-cylindrique (10) est supérieure à la largeur maximale (d) de la découpe (124):t>d.

La deuxième étape consiste alors à emboîter la première patte mâle (22) dans la première patte femelle (12). Pour cela, la bride mobile (2) est déplacée dans le plan de symétrie (A-A) du demi-collier fixe (1) jusqu'à ce que la partie (18) du corps de largeur m de la languette (220) de la première patte mâle (22) soit insérée dans la découpe (124) au niveau de la fente de longueur k. La bride mobile (2) est ensuite déplacée, toujours dans le plan de symétrie (A-A), de sorte que la partie (18) du corps de la première patte mâle (22) soit logée dans la découpe (124) au niveau de la partie de largeur d. La bride mobile (2) est ainsi associée avec le demi-collier fixe (1) de manière à permettre une articulation (4) sans que la première patte mâle (en forme de T) du demi-collier fixe (1) ne puisse se retirer facilement de la découpe (124) de la première patte femelle (12) de la bride mobile (2). La bride mobile (2) est ensuite positionnée de manière à ce que la languette de la tête (126) de la première patte femelle (12) puisse venir s'insérer dans le moyen de blocage (30) située sur la portion cylindrique (10) du demi-collier fixe (1). Lorsque la bride mobile (2) est insérée au niveau de sa languette (126) dans le moyen de blocage (30). La bride mobile (2) peut alors être lâchée par l'utilisateur pour rester emboîtée au demi-collier fixe (1). L'utilisateur n'est donc plus obligé d'immobiliser sa main pour maintenir la bride mobile (2) en position ouverte avec le demi-collier fixe (1).

La troisième étape consiste en l'installation par l'utilisateur du tuyau à fixer dans la portion semi-cylindrique (10) du demi-collier fixe (1). Le tuyau peut, par exemple, être coincé à l'aide des deux bossages (16a, 16b) évoqués précédemment sur chaque partie concave de la portion arrondie reliant les pattes de fixation (11, 12) à la portion semi-cylindrique (10) du demi-collierfixe (1).

La quatrième étape consiste en l'articulation de la bride mobile (2) autour de l'axe (Z-Z) de manière à ce que :
- le plan de symétrie (A-A) du demi-collier fixe (1) se confonde avec le plan de symétrie (B-B) de la bride mobile (2), et
- la face concave intérieure de la portion centrale (20) de la bride mobile (2) soit orientée vers la face concave intérieure de la portion centrale (10) du demi-collier fixe (1).

Pour que cette étape puisse être réalisée, la languette (126) de la bride mobile (2) doit être retirée du moyen de blocage (30).

Suivant le mode de fixation (5) du collier de l'invention, la bride mobile (2) est mise en position de telle sorte que la vis imperdable (33) ou l'embout (201) du tenon (21) de la deuxième patte mâle (23) soit orienté(e) perpendiculairement face à l'alésage (32) ou l'ouverture (110) de la deuxième patte femelle (11) du demi-collier fixe (1).

La cinquième étape relate la coopération entre l'articulation (4) et le système de fixation (5b). Elle consiste en un pivotement de la bride mobile (2) par rapport au demi-collier fixe (1) autour de l'axe (G-G) traversant le corps (221) au milieu de sa pente oblique de manière perpendiculaire au plan de symétrie (A-A) du demi-collier fixe (1) (figure 6a) afin de placer la bride mobile (2) emboîtée en juxtaposition sur le support fixe (1), formant ainsi un logement tubulaire sensiblement cylindrique destiné à contenir le tuyau à fixer. Compte tenu de la courbure du corps (200) du tenon (21) telle que l'embout (201) forme un segment d'un cylindre imaginaire dont l'axe de symétrie correspond à l'axe (G-G), le pivotement de la bride mobile (2) par rapport au demi-collier fixe (1) aboutit à la pénétration de l'ouverture (110) par le tenon (21) jusqu'à ce que la face concave intérieure de la partie semi-cylindrique (20) de la bride mobile (2) épouse le tuyau coincé à l'aide des deux bossages (16a, 16b). On suppose, dans le présent exemple, que le diamètre extérieur du tuyau à fixer correspond à celui du logement tubulaire sensiblement cylindrique du collier assemblé. De même, on observe que les corps (221, 121) des premières pattes (22, 12) formant l'articulation (4), comprennent chacun une pente oblique décrite ci-dessus, dirigée dans le sens opposé à la convexité des parties centrales (20, 10) respectivement de la bride mobile (2) et du demi-collier fixe (1). Ces pentes obliques opposée l'une à l'autre (figure 4a) des corps (221, 121) offrent une meilleure mobilité de la bride mobile (2) emboîtée au demi-collier fixe (1) lors des étapes précédentes de l'assemblage du collier.

Le collier assemblé à la fin de la cinquième étape, avec la bride mobile (2) encore non verrouillée par déformation du tenon (21) sur le demi-collier fixe (1), est illustré par la figure 4a. On en déduit clairement que l'embout (201) du tenon (21) de la deuxième patte mâle (23b) a pénétré dans l'ouverture (110) de la deuxième patte femelle (11b) sur toute sa longueur (q) (figure 6) et que le pont (27) de la deuxième patte mâle (23) de la bride mobile (2) s'appuie contre la deuxième patte femelle (11) du demi-collier fixe (1). L'embout (201) du tenon (21) se trouve donc du côté de la face extérieure du support fixe (1). L'axe (E-E) coïncidant avec la lisière de l'embout (201) du tenon (21) forme ainsi un angle aigu (α) avec l'axe (D-D) perpendiculaire au plan de la deuxième patte femelle (11) du demi-collier fixe (1) comprenant l'axe (F-O) qui coïncide avec la lisière de la deuxième patte femelle (11 b).

La sixième étape est celle du verrouillage du système de fixation (5b). Elle consiste en repliement du corps (200) du tenon (21) dans la direction de la deuxième patte femelle (11) comme le montre la flèche (F) sur la figure 4a. Pour cela l'utilisateur saisit l'embout (201) du tenon (21) à l'aide, par exemple, de ses doigts, d'une pince, d'un tournevis etc..,. Puis, en se servant de l'embout (201) comme d'un levier, il produit, par exemple, en un seul mouvement, un repliement du corps (200) en y créant une pente oblique. Dans l'exemple sur la figure 4a, le repliement du corps (200) est maximal ce qui permet de remettre la face extérieure de l'embout (201) du tenon (21) contre la face extérieure de la deuxième patte femelle (11) parallèlement à cette dernière. En d'autres termes, une fois le corps (200) replié à son maximum, les axes (E-E) et (F-O) deviennent parallèles ce qui rend l'angle (γ = α+β) initialement obtus nul.

Dans une autre variante de l'invention, le repliement du corps (200) dans le sens de la flèche (F) sur la figure 1a n'est que partiel de façon que l'angle (y) initialement obtus devienne aigu : 0 < γ < β = 90°.

Dans un mode de réalisation, le repliement mentionné du corps (200) du tenon (21) n'est pas pratiqué. La septième étape qui substitue alors la sixième étape de repliement consiste à tordre, par exemple en un seul mouvement, le corps (200) en faisant tourner l'embout (201) sur lui-même dans ou contre le sens de l'aiguille de montre autour du plan de symétrie (B-B) de la bride mobile (2) de sorte que la lisière de l'embout (201) dépasse la largeur (j) de l'ouverture (110) de la deuxième patte femelle (11).

Pour améliorer la fixation de la bride mobile (2) sur le demi-collier fixe (1) par torsion du corps (200), le tenon (21) peut comporter au moins une coupe latérale partielle (de longueur (p) sur la figure 6a) entre l'embout (201) et le corps (200). Une fois le corps (200) tordu, les épaulements de l'embout (201) ainsi créés croisent l'ouverture (110) en verrouillant l'embout (201) sur la face extérieure de la deuxième patte femelle (11) du demi-collier fixe (1). Tout pivotement de la bride mobile (2) autour de l'axe (G-G) est ainsi interdit. Le collier assemblé est donc scellé. En outre, la présence de ces coupes (p) permet avantageusement de tordre le corps (200) sur la largeur (h-2p) inférieure à la largeur (h) du corps (200). Il en résulte un avantage pour l'utilisateur en termes d'effort et de temps d'assemblage.

Dans une autre variante de ce mode de réalisation (figure 6b) de l'invention, le corps (200) du premier doigt (21) de la bride mobile (2) peut être façonné de manière à présenter au moins une saillie latérale, par exemple, en forme de T, de manière que sa largeur (h-2p) soit inférieure à celle (h) de l'embout (201). Deux épaulements (8a, 8b) opposés, par exemple, de taille identique (p), dits épaulements du tenon (21), sont façonnés entre le corps (200) et l'embout (201) de manière à ce que le tenon (21) soit, par exemple, symétrique par rapport au plan de symétrie (B-B) de la bride mobile (2). Ces deux épaulements (8a, 8b) du tenon (21) forment un axe transversal perpendiculaire au plan longitudinal de symétrie (B-B) de la bride mobile (2).

Bien entendu, ces deux géométries particulières du tenon (21) avec des coupes latérales (p) (figure 6a) ou avec des saillies latérales (en forme de T sur la figure 3b) sont aussi parfaitement compatibles avec le scellement du système de fixation (5) par le repliement du corps (200) au cours de la sixième étape décrite ci-dessus.

Dans le cas d'un système de fixation (5a) mettant en jeu une vis imperdable (33), la cinquième et la sixième étape se confondent. La vis (33), prisonnière de l'alésage (31), a son extrémité filetée située au niveau de l'alésage (32). La bride mobile (2) se trouve alors positionnée sur le demi-collier fixe (1) de sorte qu'au niveau de l'articulation (4) sans vis, le bord de longueur d de la découpe (124) contre la passerelle de renfort (28) de la première patte femelle (12) s'articule avec la partie de largeur m de la face extérieure de la première patte mâle (22) située à proximité des épaulements (223a, 223b). Ces épaulements (223a, 223b) se trouvent alors en contact avec la face extérieure de la première patte femelle (12). A partir de cette position, la fixation de la bride mobile (2) sur le demi-collier fixe (1) se fait par vissage de la vis (33) dans l'alésage taraudé (32). Le positionnement final de la bride mobile (2) se réalise avec le vissage en faisant pivoter progressivement la bride mobile (2) par rapport à l'axe (G-G) de l'articulation (4) au niveau de la zone de contact entre les deux premières pattes (9, 19), formée par le bord de la découpe (124) le plus proche du centre de la bride mobile (2) en contact avec la première patte mâle (22) du demi-collier fixe (1) et les épaulements (223a, 223b) en contact avec la première patte femelle (12) de la bride mobile (2), comme présenté dans la figure 1. Lorsque la fixation est terminée, les pattes (11 a, 23a) respectives des demi-colliers, fixe (1) et mobile (2), sont serrée l'une contre l'autre comme présenté sur les figures 1 et 3b.

Enfin, un joint, par exemple, caoutchouteux ou analogue, peut être agencé, par exemple, inséré et fixé ou non préalablement à l'aide d'une colle, sur la face intérieure de la portion semi-cylindrique (10, 20) d'au moins l'un des deux demi-colliers (1, 2). Ce joint peut avantageusement servir pour améliorer le serrage d'un tuyau par le logement tubulaire du collier assemblé, par exemple, lorsque le diamètre du tuyau est inférieur à celui du logement sensiblement cylindrique du collier selon l'invention. Dans une autre variante de réalisation de l'invention, le joint comporte un relief qui pénètre dans la rainure formée sur la face intérieure d'au moins un demi-collier suite à l'emboutissage du jonc de renfort sur la face extérieur de ce demi-collier.

Outre sa fonction améliorant le serrage, le joint peut être réalisé en matériau éventuellement composite procurant avantageusement une isolation phonique et/ou thermique et/ou antivibratoire et/ou électrique etc.

Lors du repliement ou de la torsion du corps (200) du tenon (21) par l'une de ses mains, dans le cas d'un système de fixation sans vis (5b), l'utilisateur peut exercer un appui par l'autre main par-dessus la face extérieure de la portion semi-cylindrique (20) de la bride mobile (2) afin de serrer d'avantage la bride mobile (2) contre le demi-collier fixe (1). Bien entendu, ce même effet peut être obtenu par une seule main en tirant l'embout (201) du tenon (21) de la bride mobile (2) de manière à serrer d'avantage la bride mobile (2) contre le demi-collier fixe (1) lors du repliement ou de la torsion du corps (200). Cette action peut être utile, par exemple, en présence des joints évoqués ci-dessus pour les écraser davantage contre le tuyau à fixer en assurant ainsi sa meilleure tenue dans le logement tubulaire sensiblement cylindrique du collier assemblé.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

Notamment, bien que l'invention ait été illustrée par un exemple d'un collier simple, c'est-à-dire, celui dans lequel les demi-colliers (1, 2) présentent une seule portion semi-cylindrique (10, 20) et qui, de ce fait, ne peut fixer qu'un seul tuyau, on comprendra que l'invention puisse également être utilisée dans une configuration dans laquelle le collier est au moins double, c'est-à-dire, celui dans lequel les demi-colliers (1, 2) présentent au moins deux portions semi-cylindriques (10, 20) reliés entre elles par une partie de jonction et qui, de ce fait, peut fixer au moins deux tuyaux. Dans cette configuration du collier double (multiple), le moyen de fixation (14, 15) à un support fixe peut être disposé, par exemple, sur la partie de jonction. De même, dans cette configuration du collier double (multiple), chaque partie de jonction peut disposer d'un système de fixation (5) afin de verrouiller de manière individuelle, un par un, chaque tuyau fixé par le collier double (multiple).

De même, bien que l'invention ait été illustrée par un exemple d'un collier dont chaque demi-colliers (1, 2) comprend une portion (centrale) en forme d'une gouttière semi-cylindrique (10, 20), on comprendra que l'invention puisse également être utilisée dans le cas d'une gouttière de forme quelconque. Cette forme peut, par exemple, être axisymétrique ou non axisymétrique. Ainsi, les sections du logement tubulaire du collier assemblé peuvent présenter des contours fermés quelconques (cercle, ovale, parallélogramme, trapèze, triangle, etc.).

Enfin, bien que l'invention ait été illustrée par un exemple d'un collier dont chaque demi-colliers (1, 2) est fabriqué en une seule pièce, on comprendra que l'invention puisse également être utilisée dans le cas où au moins un demi-collier (1, 2) est composé à l'aide des pièces multiples reliées les unes aux autres, par exemple, s'emboîtant les unes dans les autres à l'aide des crochets ou analogue à la manière d'un puzzle.

## Revendications

1. Collier de fixation pour tuyauterie ou analogue constitué d'au moins deux éléments distincts formant chacun un demi-collier dont l'un est fixe (1) pourvu d'un moyen de fixation à un support fixe et l'autre forme une bride mobile (2), chaque élément comprenant une face extérieure opposée à une face intérieure orientée vers l'élément en vis-à-vis, et formant au moins un logement tubulaire prévu pour le passage de la tuyauterie ou analogue lorsque les deux éléments sont assemblés, chaque demi-collier se prolongeant vers l'extérieur de chaque côté par une patte, les pattes des deux demi-colliers coopérant deux à deux et formant une articulation (4) et un système de fixation (5), de sorte que l'articulation (4) des deux demi-colliers est réalisée sans vis et comporte respectivement une première patte mâle (22) munie d'au moins une languette (220) présentant au moins une saillie latérale (223a & 223b) et une première patte femelle (12,19) munie d'au moins une découpe (124) correspondant dans une direction à la languette et dans une autre direction à la languette augmentée des saillies latérales, de sorte que la découpe est agencée pour permettre une insertion de la languette (220), et que le contact de la saillie (223a & 223b) de la languette (220) après insertion avec les bords de la découpe (124) selon la première direction confère une mobilité angulaire relative par rotation sphérique sensiblement dans toutes les directions de la première patte mâle (22) en liaison avec la première patte femelle (12), **caractérisé en ce qu'**au moins un des deux demi-colliers comporte au moins un bossage (16a & 16b) sur chaque côté du demi-collier le reliant avec la patte de fixation, les bossages (16a & 16b) étant disposés sur chaque partie concave cylindrique du demi-collier, et **en ce qu'**au moins un moyen de blocage (30) est positionné sur la portion semi-cylindrique du demi-collier fixe (1) à proximité de l'articulation (4) des deux demi-colliers, de façon à ce que lorsque le collier de serrage est en position ouverte, la languette de la patte (19) du demi-collier mobile (2), qui participe à l'articulation (4), vienne s'insérer dans le moyen de blocage (30).

2. Collier de fixation selon la revendication 1, **caractérisé en ce que** chaque bossage (16a &16b) forme un bourrelet saillant qui longe la jonction entre une patte de fixation et la partie cylindrique d'un demi-collier sur toute sa hauteur.

3. Collier de fixation selon la revendication 1, **caractérisé en ce qu'**au moins un des moyens de blocage (30) est formé par une découpe, dans la portion semi-cylindrique du demi-collier fixe (1), agencée pour former un ergot orienté vers l'articulation (4) afin de recevoir la languette de la patte (19) du demi-collier mobile (2) à bloquer.

4. Collier de fixation selon l'une des revendications 1 à 3, **caractérisé en ce que** les deux premières pattes (9, 19), mâle (22) et femelle (12), formant l'articulation (4) comportent chacune une passerelle de renfort (28, 18) plate reliant le demi-collier correspondant avec un corps (221, 121) prolongé d'une tête (222, 126) plate formant une extrémité de la première patte (22, 12), **en ce que** le corps (221, 121) forme le long du plan de symétrie (B-B, A-A) de chaque demi-collier une pente oblique comprise entre la tête plate (222, 126) et la passerelle de renfort (28, 18), et **en ce que** les pentes obliques formées par les corps (221, 121) de deux premières pattes (9, 19) sont dirigées dans le sens opposé l'une de l'autre et se croisent l'une contre l'autre une fois le collier assemblé.

5. Collier de fixation selon l'une des revendications 1 et 4, **caractérisé en ce qu'**un jonc de renfort (25) est formé par emboutissage sur la face extérieure d'au moins un demi-collier (2), créant une rainure sur la face intérieure de ce demi-collier (2).

6. Collier de fixation selon l'une des revendications 1 à 5, **caractérisé en ce qu'**au moins un joint est agencé sur la face intérieure d'au moins un demi-collier.

7. Collier de fixation selon l'une des revendications 1 à 6, **caractérisé en ce que** le système de fixation (5) permet un verrouillage du collier grâce à une vis (30) imperdable logée dans un alésage (31) situé dans une patte (23) du demi-collier mobile (2) de sorte que cette vis conserve sa mobilité selon son axe de rotation, et un alésage taraudé (32) situé dans une patte (11) du demi-collier fixe (1) et positionné de manière à recevoir la vis (30) lorsque le collier est verrouillé.

8. Collier de fixation selon l'une des revendications 1 à 6, **caractérisé en ce que** le système de fixation (5) permet un verrouillage du collier sans vis et comporte à l'extrémité opposée à l'articulation respectivement une deuxième patte mâle (23) munie d'au moins un tenon (21) et une deuxième patte femelle (11) munie d'au moins une ouverture (110) correspondante au tenon (21), et **en ce que** le tenon (21) est susceptible d'être déformé une fois inséré dans l'ouverture (110).

9. Collier de fixation selon la revendication 8, **caractérisé en ce que** le tenon (21) de la deuxième patte mâle (23) inséré dans l'ouverture (110) de la deuxième patte femelle (11) forme un angle obtus (γ) avec la deuxième patte femelle (11).

10. Collier de fixation selon les revendications 8 ou 9, **caractérisé en ce que** la déformation du tenon (21) de la deuxième patte mâle (23) inséré dans l'ouverture (110) de la deuxième patte femelle (11) s'opère par repliement d'un corps (200) du tenon (21) lors du déplacement d'un embout (201) du tenon (21) dans la direction de la deuxième patte femelle (11).

11. Collier de fixation selon les revendications 9 ou 10, **caractérisé en ce que** la déformation du tenon (21) de la deuxième patte mâle (23) inséré dans l'ouverture (110) de la deuxième patte femelle (11) s'opère par torsion d'un corps (200) du tenon (21) lorsqu'un embout (201) du tenon (21) est tourné sur lui-même.

12. Collier de fixation selon l'une des revendications 9 à 10, **caractérisé en ce que** l'embout (201) du tenon (21) présente au moins une saillie latérale ou une coupe latérale.

## Claims

1. A clamping collar for piping or similar composed of at least two different elements, each one of them forming a half clamp, one of the two elements is fixed (1) and fitted with an attachment mean to a fixed support and the other one forms a mobile flange (2); each element comprising an outer surface opposite to an inner surface oriented towards the opposite element and forming at least a tubular housing provided for passage of piping or similar when both elements are assembled; each half clamp being extended outwards on each side by a lug, the lugs of both half clamps cooperating in pairs and forming a hinge (4) and an attachment system (5), in such a way that the hinge (4) between both half clamps is operated without the use of any screw and respectively includes a first male lug (22) fitted with at least one tab (220) having at least a lateral ridge (223a & 223b) and a first female lug (12,19) fitted with at least a cut-out (124) corresponding to the tab in one direction and to the tab to which lateral ridges are added in the other direction; so that, the cut-out is adapted to allow insertion of the tab (220) and the contact of the ridge (223a & 224b) of the tab (220) after insertion into the edges (124) of the cut-out in the first direction offers relative angular mobility through spherical rotation in almost all directions for the first male lug (22) in connection with the first female lug (12), **characterised in that** at least one of both half clamps includes at least a boss (16a & 16b) on each side of the half clamp, connecting it to the fixing lug, the bosses (16a & 16b) being arranged on each concave cylindrical part of the half clamp and **in that** at least a blocking mean (30) is positioned on the half-cylindrical part of the fixed half clamp (1) near the hinge between both half clamps, so as, when the clamping collar in open position, the tab of the lug (19) of the mobile half clamp (2) which participate in the hinge (4) is inserted into the blocking mean (30).

2. A clamping collar according to claim 1, **characterised in that** each boss (16a &16b) forms a projecting bead along the junction between the fixing lug and the cylindrical part of a half clamp over its entire height.

3. A clamping collar according to claim 1, **characterised in that** at least one of the blocking means (30) is formed by a cut-out into the half-cylindrical part of the fixed half clamp (1), fitted to form a pin oriented towards the hinge (4) in order to receive the tab of the lug (19) of the mobile half clamp (2) to be blocked.

4. A clamping collar according to any one of claims 1 to 3, **characterised in that** each one of the first two lugs (9, 19), male (22) and female (12), that form the hinge (4), includes a flat connection reinforcement (28,18) connecting the corresponding half clamp to a body (221, 121) extended with a flat head, forming one end of the first lug (22,12), **in that** the body (221, 121) forms along the plane of symmetry (B-B, A-A) of each half clamp, a slanting line between the flat head (222, 126) and the connection reinforcement (28,18), and **in that** the slanting lines formed by the bodies (221, 121) of the first two lugs (9,19) are in the opposite direction relative to one another and meet once the collar is assembled.

5. A clamping collar according to any one of claims 1 and 4, **characterised in that** a reinforcing ring (25) is formed by stamping on the outer surface of at least one half clamp (2), creating a groove on the inner surface of this half clamp (2).

6. A clamping collar according to any one of claims 1 to 5, **characterised in that** at least one seal is fitted to the inner surface of at least one half clamp.

7. A clamping according to any one of claims 1 to 6, **characterised in that** the attachment system (5) allows locking of the collar with a captive screw (30) lodged in a bore (31) located in a lug (23) of the mobile half clamp (2) in such a way that this screw remains mobile along its axis of rotation, and a tapped bore (32) located in a lug (11) of the fixed half clamp (1) is positioned for receiving the screw (30) when the camping collar is locked.

8. La clamping collar according to any one of claims 1 to 6, **characterised in that** the attachment device (5) allows locking of the collar without the use of a screw and respectively includes at the end facing the hinge a second male lug (23) fitted with at least one stud (21) and a second female lug (11) fitted with at least one orifice (110) corresponding to the stud (21) and that the stud (21) is subject to be deformed once it is inserted into the orifice (110).

9. A clamping collar according to claim 8, **characterised in that** the stud (21) of the second male lug (23) inserted into the orifice (110) of the second female lug (11) forms an obtuse angle (γ) with the second female lug (11).

10. A clamping collar according to claim 8 or 9, **characterised in that** deformation of the stud (21) of the second male lug (23) inserted into the orifice (110) of the second female lug (11) occurs when a part (200) of the stud (21) is folded when displacing the end (201) of the stud (21) in the direction of the second female lug (11).

11. A clamping collar according to claims 9 or 10, **characterised in that** deformation of the stud (21) of the second male lug (23) inserted into the orifice (110) of the second female lug (11) is caused by torsion of a part (200) of the stud when the end (20) of the stud (21) is turned on itself.

12. A clamping collar according to any one of claims 9 to 10, **characterised in that** the end (201) of the stud (21) has at least a lateral ridge or a lateral cut-out.

## Patentansprüche

1. Befestigungsschelle für eine Rohrleitung oder dergleichen, gebildet aus mindestens zwei unterschiedlichen Elementen, die jeweils eine Halbschelle ausbilden, von denen die eine ortsfest (1) und mit einem Mittel zum Befestigen an einer ortsfesten Stütze versehen ist und die andere eine bewegbare Einspannvorrichtung (2) ausbildet, wobei jedes Element eine Außenfläche aufweist, die zu einer zu dem gegenüberliegenden Element hin ausgerichteten Innenfläche entgegengesetzt ist, und mindestens eine rohrförmige Aufnahme ausbildet, die für das Hindurchverlaufen der Rohrleitung oder dergleichen vorgesehen ist, wenn die beiden Elemente montiert sind, wobei sich jede Halbschelle auf jeder Seite durch eine Lasche nach außen verlängert, wobei die Laschen der beiden Halbschellen paarweise zusammenwirken und eine Gelenkverbindung (4) und ein Befestigungssystem (5) derart ausbilden, dass die Gelenkverbindung (4) der beiden Halbschellen ohne Schraube ausgeführt ist und jeweils aufweist: eine erste Stecklasche (22), die mit mindestens einer Zunge (220) versehen ist, die mindestens einen seitlichen Vorsprung (223a und 223b) aufweist, und eine erste Buchsenlasche (12, 19), die mit mindestens einem Ausschnitt (124) versehen ist, der in einer Richtung mit der Zunge und in einer anderen Richtung mit der um die seitlichen Vorsprünge, erweiterte Zunge korrespondiert, so dass der Ausschnitt eingerichtet ist, um ein Einsetzen der Zunge (220) zuzulassen, und dass nach dem Einsetzen der Kontakt des Vorsprungs (223a und 223b) der Zunge (220) mit den Rändern des Ausschnitts (124) entlang der ersten Richtung eine relative Minkelbewegbarkeit durch kreisförmige Drehen im Wesentlichen in allen Dichtungen der ersten Stecklasche (22) in Verbindung mit der ersten Buchsenlasche (12) gewährt, **dadurch gekennzeichnet, dass** mindestens eine der beiden Halbschellen mindestens eine Erhebung (16a und 16b) auf beiden Seiten der Halbschelle aufweist, die diese mit der Befestigungslasche verbindet, wobei die Erhebungen (16a und 16b) an jedem konkaven zylinderförmigen Teil der Halbschelle ungeordnet sind, und dass mindestens ein Blockierungselement (30) an dem halbzylinderförmigen Abschnitt der ortsfesten Halbschelle (1) in der Nähe der Gelenkverbindung (4) der beiden Halbschellen anbeordnet ist, so dass, wenn sich die Befestigungsschelle in der Öffnungsposition befindet, die Zunge der Lasche (19) der bewegbare Halbschelle (2), die bei der Gelenkverbindung (4) mitwirkt, in das Blockierungsmittel (30) eingesetzt wird.

2. Befestigungsschelle gemäß Anspruch 1, **dadurch gekennzeichnet, dass** jede Erhebung (16a und 16b) einen hervorstehenden Wulst ausbilden, der die Verbindung zwischen einer Befestiguhgslasche und dem zylinderförmigen Teil einer Halbschelle entlang ihrer gesamten Höhe entlangverläuft.

3. Befestigungsschelle gemäß Anspruch 1, **dadurch gekennzeichnet, dass** mindestens eines der Blockierungsmittel (30) durch einen Ausschnitt in dem halbzylinderförmigen Abschnitt der ortsfesten Halbschelle (1) ausgebildet ist, der zum ausbilden eines Ansatzes eingerichtet ist, der in Richtung zum der Gelenkverbindung (4) ausgerichtet ist, um die Zunge der Lasche (19) der zu blockierenden bewegbaren Halbschelle (2) aufzunehmen.

4. Befestigungsschelle gemäß einem der Ansprüche 1 bis 3, **dadurch gekennzeichnet, dass** die beiden ersten Laschen (9, 19), die Stecklasche (22) und die Buchsenlasche (12), die die Gelenkverbindung (4) ausbilden, jeweils einen flachen Verstärkungssteg (28, 18) aufweisen, der die jeweilige Halbschelle mit einem Körper (221, 121) verbindet, der um einen flachen Kopf (222, 126) verlängert ist, der ein Ende der ersten Lasche (22, 12) ausbildet, dass der Körper (221, 121) entlang der Symmetrie-Ebene (B-B, A-A) jeder Halbschelle eine schräge Neigung ausbildet, die sich zwischen dem flachen Kopf (222, 126) und dem Verstärkungssteg (28, 18) befindet, und dass die schrägen Neigungen, die durch die Körper (221, 121) von zwei ersten Laschen (9, 19) ausgebildet sind, in einer einander entgegengesetzten Richtung aufgerichtet sind und einander kreuzen, wenn die Schelle montiert ist.

5. Befestigungsschelle gemäß einem der Ansprüche 1 und 4, **dadurch gekennzeichnet, dass** eine Verstärkungsstange (25) mittels Pressens an der Außenfläche mindestens einer Halbschelle (2) ausgebildet ist, die an der Innenfläche der Halbschelle (2) eine Einkerbung erzeugt.

6. Befestigungsschelle gemäß einem der Ansprüche 1 bis 5, **dadurch gekennzeichnet, dass** mindestens eine Dichtung an der Innenfläche mindestens einer Halbschelle ausgebildet ist.

7. Befestigungsschelle gemäß einem der Ansprüche 1 bis 6, **dadurch gekennzeichnet, dass** das Befestigungssystem (5) ein Verriegeln der Schelle mit Hilfe einer unverlierbare Schraube (30) ermöglicht, die in einer in einer Lasche (23) der bewegbaren Halbschelle (2) angeordneten Bohrung (31) derart aufgenommen ist, dass die Schraube ihre Bewegbarkeit entlang ihrer Rotationsachse beibehalt, und wobei sich eine Gewindebohrung (32) in eine Lasche (11) der ortsfesten Halbschelle (1) befindet und derart positioniert ist, dass sie die Schraube (30) aufnimmt, wenn die Schelle verriegelt ist.

8. Befestigungsschelle gemäß einem der Ansprüche 1 bis 6, **dadurch gekennzeichnet, dass** das Befestigungssystem (5) ein Verriegeln der Schelle ohne Schraube ermöglicht und an dem der Gelenkverbindung entgegengesetzten Ende jeweils eine zweite mit mindestens einem Zapfen (21) versehene Stecklasche (23) und eine zweite Buchsenlasche (11) aufweiset, die mit mindestens einer mit dem Zapfen (21) korrespondierenden Öffnung (110) versehen ist, und dass der Zapfen (21) geeignet ist, verformt zu werden, sobald er in die Öffnung (110) eingesetzt ist.

9. Befestigungsschelle gemäß Anspruch 8, **dadurch gekennzeichnet, dass** der in die Öffnung (110) der zweiten Buchsenlasche (11) eingesetzte Zapfen (21) der zweiten Stecklasche (23) mit der zweiten Buchsenlasche (11) einen stumpfen Winkel (γ) ausbilden.

10. Befestigungsschelle gemäß den Ansprüchen 8 oder 9, **dadurch gekennzeichnet, dass** die Verformung des in die Öffnung (110) der zweiten Buchsenlasche (11) eingesetzten Zapfens (21) der zweiten Stecklasche (23) durch Umknicken eines Körpers (200) des Zapfens (21) beim Bewegen eines Ansatzstücks (201) des Zapfens (21) in Richtung der zweiten Buchenlasche (11) erfolgt.

11. Befestigungsschelle gemäß den Ansprüchen 9 oder 10, **dadurch gekennzeichnet, dass** die Verformung des in die Öffnung (110) der zweiten Buchsenlasche (11) eingesetzten Zapfens (21) der zweiten Stecklasche (23) durch Verdrehen eines Körpers (200) des Zapfens (21) erfolgt, wenn ein Ansatzstück (201) des Zapfens (21) um sich selbst gedreht wird.

12. Befestigungsschelle gemäß einem der Ansprüche 9 bis 10, **dadurch gekennzeichnet, dass** das Ansatzstück (201) des Zapfens (21) mindestens einen seitlichen Vorsprung oder einen seitlichen Ausschnitt aufweist.
